# EUROPÄISCHE PATENTSCHRIFT

(11) **EP 0 758 278 B1**
(45) Veröffentlichungstag und Bekanntmachung des Hinweises auf die Patenterteilung: **15.04.1998**
(21) Anmeldenummer: 95905044.4
(22) Anmeldetag: 07.01.1995
(51) Int. Cl.: B23B 27/04, B23B 27/16, B23B 27/06

(54) **SPANENDES WERKZEUG**
MACHINING TOOL
OUTIL D'USINAGE

(30) Priorität: 03.05.1994 DE 4415425
(43) Veröffentlichungstag der Anmeldung: 19.02.1997
(73) Patentinhaber: Widia GmbH, 45145 Essen (DE)
(72) Erfinder: VON HAAS, Rainer, D-21502 Geesthacht (DE); JESTER, Willi, D-45701 Herten (DE)
(74) Vertreter: Vomberg, Friedhelm, Dipl.-Phys.
(86) Internationale Anmeldenummer: DE9500018
(87) Internationale Veröffentlichungsnummer: WO9529781

(56) Entgegenhaltungen:
- EP-A- 0 074 601
- EP-A- 0 094 537
- EP-A- 0 232 692
- FR-A- 2 052 070
- GB-A- 1 088 465

## Beschreibung

Die Erfindung betrifft ein spanendes Werkzeug mit einem in einem Werkzeugträger auswechselbar über einen Klemmfinger gehalterten Schneideinsatz, insbesondere Stecheinsatz.

Bei einem Werkzeug gemäß der FR-A-2 052 070 wird der Schneideinsatz von einer Spannpratze gegen einen Anschlag gezogen.

Zur Klemmung eines Stecheinsatzes ist beispielsweise aus der DE 34 34 089 C2 bekannt, mittels eines längsverschieblich geführten Spannblattes den Schneideinsatz gegen einen Werkzeugträger unter Betätigung einer Spannschraube zu klemmen. Die korrespondierenden Klemmflächen des Spannblattes sowie des Schneideinsatzes besitzen jeweils eine prismenartige Form.

Aus der DE 32 19 150 C2 ist ein Klemmsystem bekannt, bei dem der Schneideinsatz und der obere Klemmbacken mit einem Einschubbegrenzungsanschlag versehen sind, wobei bei höherem Anschlagdruck auf den Anschlag des Klemmbackens dieser hebelartig verschwenkt und den Schneideinsatz in den Klemmspalt hineinzieht. Die gegenüberliegenden zur Übertragung und Aufnahme der vertikalen Klemmkräfte dienenden Klemmflächen des Schneideinsatzes und des Klemmarmes sind in Richtung des geschlossenen Endes des Klemmspaltes divergierend zueinander ausgebildet.

Nach der EP 0 388 688 wird ein spanendes Werkzeug vorgeschlagen, dessen Werkzeugträger und Schneideinsatz jeweils aneinanderliegende prismenartige Klemmflächen besitzt, wovon ein zusammenwirkendes Klemmflächenpaar derart schräg angeordnet ist, daß eine zum offenen Ende des Klemmspaltes gerichtete Kraftkomponente am Schneideinsatz angreift, wenn der Klemmarm durch die Spannschraube auf den Schneideinsatz gedrückt wird. Hiermit soll eine spannzangenartige Umfassung des Schneideinsatzes erreicht werden. Nachteilig an dieser Ausführungsform ist, daß bei Anziehen der Spannschraube der Schneideinsatz einen Vortrieb erfährt, bevor die vertikale Klemmkraft ausreicht, um den Schneideinsatz fest in den Sitz zu pressen. Wegen der jeweiligen prismatischen Ausbildung der oberen Klemmfläche und der schräggestellten dahinterliegenden Klemmflächen ist ein Verkanten des Schneideinsatzes im Werkzeugträger nicht auszuschließen. Die genannten Klemmflächen können auch konvex oder konkav ausgebildet sein.

Aus der US-A-3 894 322 ist ein Werkzeug bekannt, das vier parallel zur Schneidkante bzw. den Schneidkanten verlaufende Klemmflächen besitzt, die im Querschnitt ein Parallelogramm bilden. Die Klemmbacken sind entsprechend ausgebildet, so daß beim Anziehen einer Spannschraube der obere Klemmbacken den Schneideinsatz in den Sitz preßt. Allerdings ist dieser Schneideinsatz nur im Hinblick auf Verschiebungen senkrecht zur jeweiligen Schneidkante, nicht jedoch gegen Querverschiebungen, d.h., Verschiebungen in Richtung der Schneidkante, gesichert.

Es ist Aufgabe der vorliegenden Erfindung, das spanende Werkzeug der eingangs genannten Art dahingehend weiterzuentwickeln, daß der Schneideinsatz eine definierte Klemmanlage in allen Richtungen erfährt.

Diese Aufgabe wird durch das spanende Werkzeug nach Anspruch 1 gelöst. Bei diesem Werkzeug weist der Klemmfinger an seiner dem Schneideinsatz zugewandten Seite eine Klemmwarze auf, die in eine korrespondierende Schneideinsatzmulde eingreift, oder er besitzt eine Klemmulde, die eine korrespondierende Schneideinsatzerhöhung übergreift, wobei die Klemmwarze an der Schneideinsatzmulde oder die Klemmulde an der Schneideinsatzerhöhung an mindestens drei Punkten derart angreift, daß der Schneideinsatz nach allen Richtungen, insbesondere in der Horizontalen, d.h., senkrecht zur Klemmrichtung festgelegt ist. Der Klemmfinger ist Teil eines selbstklemmenden oder mittels einer Spannschraube betätigbaren, in allen Richtungen spielfrei zentrierten Klemmbackens oder einer Spannpratze. Die Auflageseite des Werkzeuges und des Schneideinsatzes sind vorzugsweise prismatisch ausgeführt.

Weiterhin vorzugsweise ist die Klemmwarze oder Klemmulde einerseits und/oder die korrespondierend ausgebildete Schneideinsatzmulde oder Schneideinsatzerhöhung andererseits in Form eines drei-, vier- oder mehreckigen Pyramidenstumpfes, einer Kugel- oder Rotationsellipsoidschicht oder einer Kugel- oder Rotationsellipsoidkappe oder eine in der Draufsicht länglichrunde Form mit schrägen Seitenflächen ausgebildet.

Grundsätzlich, insbesondere bei keramischen Schneideinsätzen, sind zwar Klemmulden bekannt, in die ein kugelkappenförmiger Klemmfinger bzw. eine kugelkappenförmige Klemmwarze eingreifen soll, jedoch ist jeweils eine punktförmige Anlage der Kugelkappe an der Schneideinsatzmulde derart vorgesehen, daß der Schneideinsatz beim Spannen nach rückwärts in den Plattensitz gepreßt wird. Demgegenüber ist das erfindungsgemäße Werkzeug derart ausgebildet, daß die Spannkraft über die Klemmfingerwarze oder Klemmulde im wesentlichen vertial angreift und den Schneideinsatz ohne Verschiebung nach rückwärts in den Plattensitz oder nach vorne senkrecht auf den Werkzeugträgerplattensitz anpreßt. Dies hat den Vorteil, daß der Schneideinsatz an der der aktiven Schneidkante gegenüberliegenden Seite gegenüber dem Werkzeugträger frei liegen kann. Die Klemmanlage erfolgt an mindestens drei Punkten, die miteinander verbunden ein vorzugsweise gleichseitiges oder aber gleichschenkliges Dreieck bilden, so daß von vornherein beim Spannen Horizontalbewegungen des Schneideinsatzes in bezug auf die vertikale Spannkraft auszuschließen sind. Erfindungsgemäß können jeweils Kugelsegmentflächen einer Erhöhung oder Mulde an einer ebenen Fläche oder Kugelflächen mit gleichem oder unterschiedlichem Radius aneinander oder beliebig gekrümmte Flächen an ebenen oder ebenfalls gekrümmten Flächen anliegen, sofern die Bedingung erfüllt ist, daß der Schneideinsatz beim Spannen nicht zur Seite ausweichen kann bzw. verschoben wird. Dies wird nach einer Ausgestaltung der Erfindung dadurch erreicht, daß in der Klemmanlage mindestens drei Punkte oder mindestens drei oder mehr ein n-Eck in der Draufsicht bildende Flächen des Klemmfingers und des Schneideinsatzes aneinanderliegen oder daß die Klemmung rundum über 360° erfolgt, d.h., wenn jeweilige Kugelkappen oder Kugelscheiben als Erhöhung bzw. Mulden aneinanderliegen. Entsprechendes gilt für Rotationsellipsoidschichten oder -kappen sowie länglich-ovale Klemmwarzen bzw. -mulden.

Vorzugsweise liegt bei Wahl eines Pyramidenstumpfes der pyramidenstumpfwinkel zwischen 150° und 90°.

Die Lage des Schneideinsatzes zum Werkzeugträger wird bei einer Klemmwarze und einer Schneideinsatzmulde definiert. Um auch hier variieren zu können, ist nach einer weiteren Ausgestaltung der Erfindung vorgesehen, daß der Schneideinsatz mehrere, vorzugsweise hintereinanderliegende Mulden und/oder Erhöhungen bei vorzugsweise einer Klemmwarze oder Klemmulde des Klemmfingers aufweist. Durch diese Maßnahme hat man die Möglichkeit, mehrere Klemmulden exzentrisch anzuordnen, so daß nach dem Drehen eines mehrschneidigen Werkzeuges die jeweils nächste Klemmulde bzw. bei 180°-Drehung die gegenüberliegende Klemmulde zum Eingriff des Klemmfingers benutzt wird.

Der Klemmfinger kann sowohl Teil eines selbstklemmenden oder mittels einer Spannschraube betätigbaren Klemmbackens des Werkzeugträgers oder Teil einer (in allen Richtungen spielfrei zentrierten) Spannpratze sein.

Nach einer weiteren Ausgestaltung der Erfindung besitzt der Schneideinsatz einen zumindest teilweise prismatisch ausgebildeten Boden, der in einem entsprechend prismatischen Plattensitz gehaltert wird, oder in seiner Bodenfläche, vorzugsweise der Mulde oder der Erhöhung gegenüberliegend eine Ausnehmung zur Bildung eines Hohlbodenteilbereiches. Hierdurch wird die Stabilität des eingespannten Werkzeuges verbessert, da die Gefahr von etwaigen Wipp-Effekten durch unebene Schneideinsatzböden oder dort liegende Schmutzpartikel minimiert wird.

Nach einer weiteren Ausbildung der Erfindung ist vorgesehen, daß an der Klemmulde oder an der Schneideinsatzmulde eine bis zum vorderen Ende des Klemmfingers reichende axiale Führungsnut anschließt, die eine axiale Bewegung des Schneideinsatzes beim Einsetzen oder Herausziehen unter seitlicher Führung, vorzugsweise mit ausreichendem Spiel, ermöglicht. Hierdurch kann der Schneideinsatz bedienerfreundlich gewechselt werden, wobei er schon beim Einführen in den Klemmarm geführt wird, bis die Schneideinsatzerhöhung der Klemmulde oder Schneideinsatzmulde gegenüberliegt. Vorzugsweise besitzt der Schneideinsatz einen prismatischen Boden, der in einer prismatischen Auflagefläche des Halters führbar ist. Die prismatische untere Führung sowie die Führung des Klemmarmes verhindern während des Einsetzens oder des Herausziehens des Schneideinsatzes, daß der Schneideinsatz seitlich kippen kann. Die Klemmulde und die Schneideinsatzerhöhung bzw. die Schneideinsatzmulde und die Klemmwarze sind kugelkappenförmig ausgebildet. Die Klemmulde des Klemmfingers weist vorzugsweise einen kleineren Radius auf als der Radius der Schneideinsatzerhöhung. Entsprechendes gilt hinsichtlich des Radius der Schneideinsatzmulde zum Radius der Klemmwarze. Die Tiefe der Führungsnut ist kleiner als die Tiefe der Klemmulde bzw. die Breite der Führungsnut kleiner als die Breite der Klemmulde. Bevorzugt besitzt die Führungsnut entlang ihrer Längsachse einen konstanten Radius und eine gleichbleibende Tiefe, wobei sie vorzugsweise eine teilzylinderförmige Aussparung darstellt. Der Radius der Führungsnut wird vorteilhafterweise etwa mit gleicher Größe wie der Radius der Schneideinsatzerhöhung ausgelegt, Die vorgenannten Maßnahmen bewirken, daß der Schneideinsatz mit seiner vorzugsweise kugelkappenförmigen Schneideinsatzerhöhung oder die Klemmwarze in der Führungsnut bzw. Teil-Zylinderaussparung mit ausreichendem Spiel verschoben werden kann bis zu einer Lage, in der der Schneideinsatz mit seiner hinteren Freifläche an einer Schneideinsatzträger-(Werkzeughalter-)Fläche oder mit der Schneideinsatzerhöhung oder der Klemmwarze an der rückseitigen Klemmuldenfläche oder Schneideinsatzmulde anstößt. Die Dimensionierung der Tiefe ist derart gewählt, daß während des Einschiebens oder Herausziehens bzw. im ungeklemmten Zustand der Schneideinsatz nicht um seine Längsachse ausschwenken kann. Während des Einschiebens liegt die Schneideinsatzerhöhung unterhalb der Teil-Zylinderaussparung, so daß nach dem Spannen des Klemmfingers der Schneideinsatz durch entsprechende Bewegung des Klemmarmes auf den Schneideinsatz derart positioniert ist, daß er auch gegen ein Herausziehen gesichert ist. Der besondere Vorteil der vorbeschriebenen Maßnahmen stellt sich darin dar, daß der Schneideinsatz in jeder Lage des Werkzeugträgers, auch in einer Überkopflage, ohne Gefahr einer Fehlklemmung gespannt werden kann, da die Klemmulde die kugelkappenförmige Schneideinsatzerhöhung und damit den Schneideinsatz durch den Klemmvorgang, z.B. beim Anziehen einer Klemmschraube, zentriert. Wählt man den Kugelradius der Klemmulde im Klemmfinger kleiner als den Kugelradius der kugelkappenförmigen Schneideinsatzerhöhung, so entsteht eine relativ große Klemmberührungsfläche am größtmöglichen Durchmesser der Berührungsflächen zwischen der Klemmulde und der Schneideinsatzerhöhung. Entsprechendes gilt bei Verwendung einer Klemmwarze und einer Schneideinsatzmulde.

Der Schneideinsatz kann als doppelseitig verwendbarer Stecheinsatz ausgebildet sein. Nach einer weiteren Ausgestaltung sind weitere Varianten dergestalt möglich, daß der Stecheinsatz eine sich an die Hauptschneide anschließende und zu ihr wie zu einer Stecheinsatzschaftseitenfläche spitzwinklig verlaufende Nebenschneide aufweist.

Nach einer weiteren Ausbildung dieses Stecheinsatzes kann sich an die Nebenschneide eine rückwärtige Schneidkante anschließen, die im wesentlichen parallel zur vorderen Hauptschneidkante verläuft. Die vorgenannten Ausführungsformen werden möglich, da der Stecheinsatz durch die Klemmung in allen Richtungen gesichert ist, also beispielsweise beim Rückwärtsschneiden nicht aus dem Plattensitz herausgezogen werden kann, wie dies bei praktisch allen Spannsystemen nach dem Stand der Technik bisher noch möglich ist. Insbesondere kann der Stecheinsatz in bezug auf seine Längsachse asymmetrisch ausgebildet sein, um beim Innendrehen speziellen Operationen angepaßt zu werden.

Ausführungsbeispiele der Erfindung sind in den Zeichnungen dargestellt. Es zeigen jeweils in schematischer Darstellung
- Fig. 1: eine Seitenansicht eines Stecheinsatzes in geklemmter Stellung in einem Werkzeughalter,
- Fig. 2a bis d: jeweilige Ausführungsmöglichkeiten der Klemmwarze oder -mulde bzw. der korrespondierenden Schneideinsatzerhöhung oder Schneideinsatzmulde,
- Fig. 3a, b: eine Ansicht und eine Schnittansicht eines doppelseitig verwendbaren Schneideinsatzes,
- Fig. 4: die Draufsicht auf einen in einem Werkzeugträger klemmend gehalterten Stecheinsatz,
- Fig. 5 und 6: jeweils Draufsichten auf neuartige Stecheinsätze in einer klemmenden Halterung in einem Werkzeugträger,
- Fig. 7: eine Seitenansicht eines weiteren erfindungsgemäßen Werkzeuges,
- Fig. 8: eine Teilseitenansicht eines Klemmfingers als Teil eines Werkzeugträgers und eine Teilansicht des Schneideinsatzes im ungespannten Zustand,
- Fig. 9: eine Stirnansicht der Teile nach Fig. 8,
- Fig. 10 und 11: jeweilige Ansichten entsprechend Fig. 8 und Fig. 9 der betreffenden Teile in gespanntem Zustand.

Die vorliegende Erfindung ist grundsätzlich anwendbar auf alle Formen von Schneideinsätzen, die selbstklemmend oder unter Betätigung einer Klemmschraube über eine Spannpratze in einem Werkzeugträger gehaltert werden. Die Klemmung erfolgt über einen Klemmfinger 10, der an seiner Unterseite, d.h., der dem Schneideinsatz 11 zugewandten Seite eine Klemmulde 12 besitzt, die im vorliegenden Fall als Kugelkappe, d.h., mit konstantem Radius ausgebildet ist. Dieser Klemmfinger übergreift eine Kugelscheibe 13 als erhabenes Teil auf der Spanfläche des Schneideinsatzes 11. Der Kugelscheibenradius entspricht dem Radius der Kugelkappe der Klemmpratzenmulde. In entsprechender Weise kann auch der Klemmfinger 10 mit einer Klemmwarze, d.h., einer Erhöhung, und der Schneideinsatz 11 mit einer Klemmulde, d.h., einer Vertiefung, ausgestattet sein. Im vorliegenden Fall besitzt der Schneideinsatz an seiner prismatisch ausgeführten Unterseite noch eine Ausnehmung 14 unter Bildung eines Hohlbodenteilbereiches.

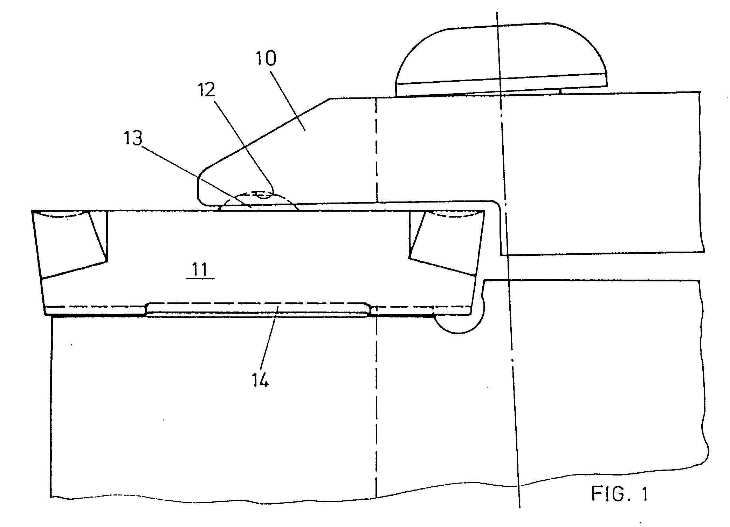

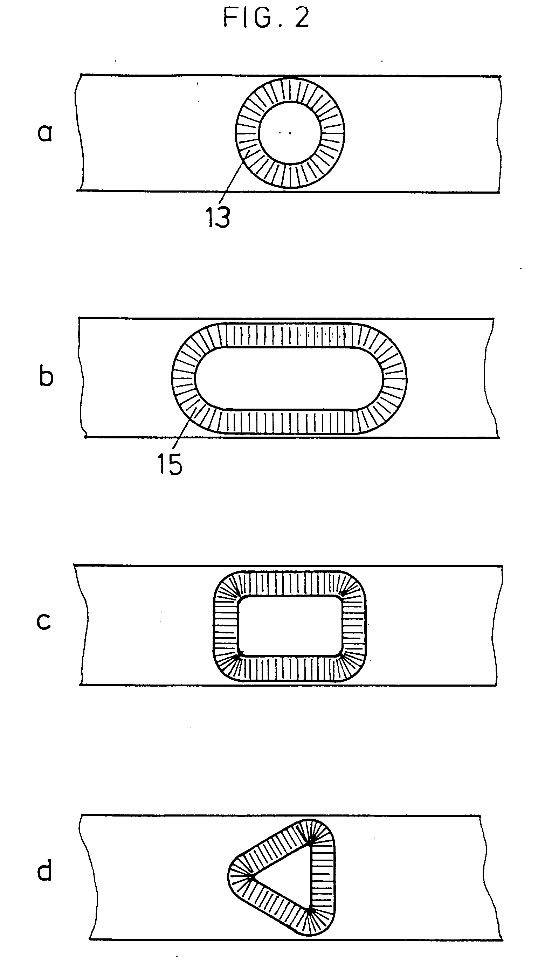

Wie bereits oben ausgeführt, können die Mulden oder Erhöhungen jeweils teilkugel- oder teilrotationsellipsoide oder sonstige gerundete Flächen oder auch ebene Flächenabschnitte aufweisen. Nach Fig. 2a, die einer Draufsicht nach Fig. 1 entspricht, besitzt der Schneideinsatz eine Erhöhung in der Spanfläche in Form einer Kugelscheibe, womit eine Rundumspannkraftübertragung vom Klemmfinger auf den Schneideinsatz erzielt wird. Das Werkzeug ist in bezug auf jegliche Verschiebung in Richtung der Zeichenebene nach dem Spannen gehemmt, d.h., es können beliebige Werkzeugoperationen durchgeführt werden, ohne daß ein Herausziehen des Schneideinsatzes aus dem Klemmsitz befürchtet werden muß. Dies gilt selbst für den Fall, daß die Klemmkraft nicht exakt vertikal aufgebracht wird, d.h., die kugelkappenförmige Vertiefung schräg von oben auf die Kugelscheibe aufsetzt.

Nach der Ausführungsvarianten entsprechend Fig. 2b können die Erhöhungen oder Ausnehmungen eine Rotationsellipsoidscheibenform 15 aufweisen, die auch zu einer länglich-runden Form mit jeweils zwei parallelen gegenüberliegenden Seiten variiert werden kann.

Nach Fig. 2c sind die jeweils bei Klemmung aktiv werdenden gestrichelt gezeichneten Klemmflächen in Form eines Rechteckes zueinander angeordnet, d.h., die Erhebung und/oder Mulde besitzt eine Pyramidenstumpfform. Die Mindestanzahl der jeweiligen Flächen wird durch die dreieckige Pyramidenstumpfform nach Fig. 2d erreicht. Im Sinne der Erfindung können die Pyramidenstumpfseitenkanten auch abgerundet sein. Ebenso ist es möglich, Erhöhungen oder Warzen mit Mulden unterschiedlicher Gestaltung zu kombinieren, d.h., beispielsweise die Klemmwarze kugelscheibenförmig auszubilden und die Mulde pyramidenstumpfförmig, etwa im Sinne von Fig. 2c und d, soweit jeweils gewährleistet ist, daß der Schneideinsatz gegen Horizontalverschiebungen nach allen Seiten gesichert ist.

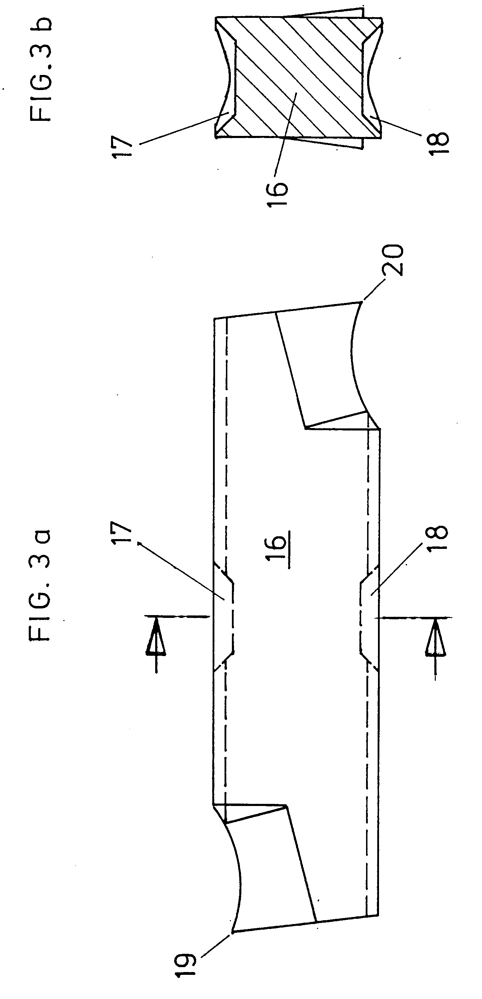

So ist beispielsweise nach Fig. 3a und 3b ein doppelseitig verwendbarer Schneideinsatz 16 vorgesehen, der jeweils eine obere und/oder untere pyramidenstumpfförmige Ausnehmung 17 und 18 sowie jeweilige Schneidkanten 19 und 20 aufweist.

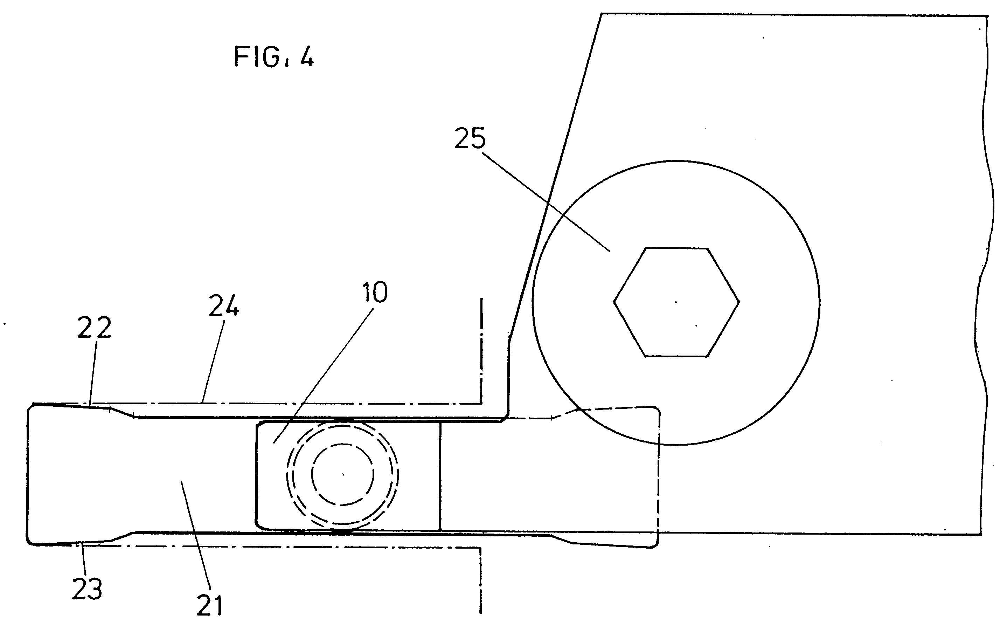

Die Fig. 4 bis 6 zeigen verschiedene Stecheinsätze, wobei der Stecheinsatz 21 nach Fig. 4 in bezug auf seine Längsachse symmetrisch ausgebildet ist, d.h., insbesondere die Nebenschneiden 22 und 23 bilden mit der Längsachse bzw. den Schaftseitenflächen jeweils gleiche spitze Winkel. Auch beim Rückziehen aus der gestochenen Nut 24 ist der Schneideinsatz gegen ein Herausziehen gesichert. Die Klemmung erfolgt mittels einer Spannschraube 25, die den Klemmfinger 10 auf den Schneideinsatz 21 preßt.

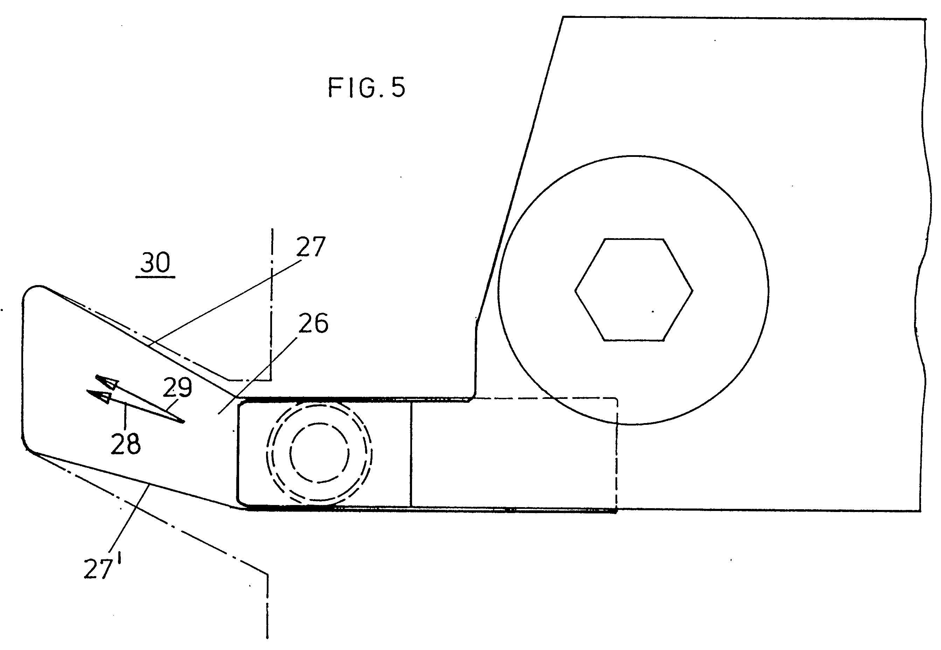

Nach Fig. 5 hat der Stecheinsatz 26 eine asymmetrische Ausbildung, d.h., die beiden Nebenschneiden 27 und 27' verlaufen nicht parallel bzw. unter gleichem Winkel oder gleicher Winkelrichtung (positiv oder negativ), so daß Schnittbewegungen sowohl in Richtung des Pfeiles 28 als auch des Pfeiles 29 im Werkstück 30 ausgeführt werden können. Der Stecheinsatz 31 nach

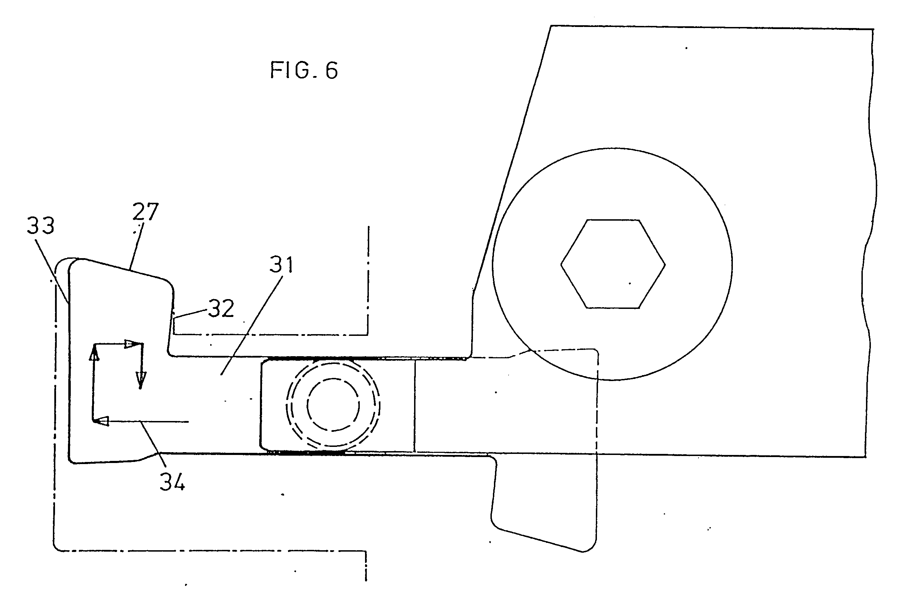

Fig. 6 ist in der Draufsicht gesehen asymmetrisch ausgestaltet, insbesondere besitzt er eine rückwärtige Schneidkante 32, eine Nebenschneide 27 sowie eine Hauptschneide 33, so daß ein Verfahren des Werkzeuges in Richtung der Pfeilkombination 34 möglich wird, d.h., ein Vorwärtsstechen, eine seitliche Stechbewegung sowie ein Zurückverfahren möglich sind.

Darüber hinaus sind durch die neuartige Klemmung sämtliche Ausführungsvarianten von Stecheinsätzen möglich, die in beliebigen Raumrichtungen Dreh-Operationen ausführen, da eine obere und untere Klemmsicherung jeweils durch den Klemmfinger und den prismatischen Schneideinsatz-Plattensitz und eine seitliche Verschiebung durch die erfindungsgemäße rundum wirksame Klemmung erreicht werden.

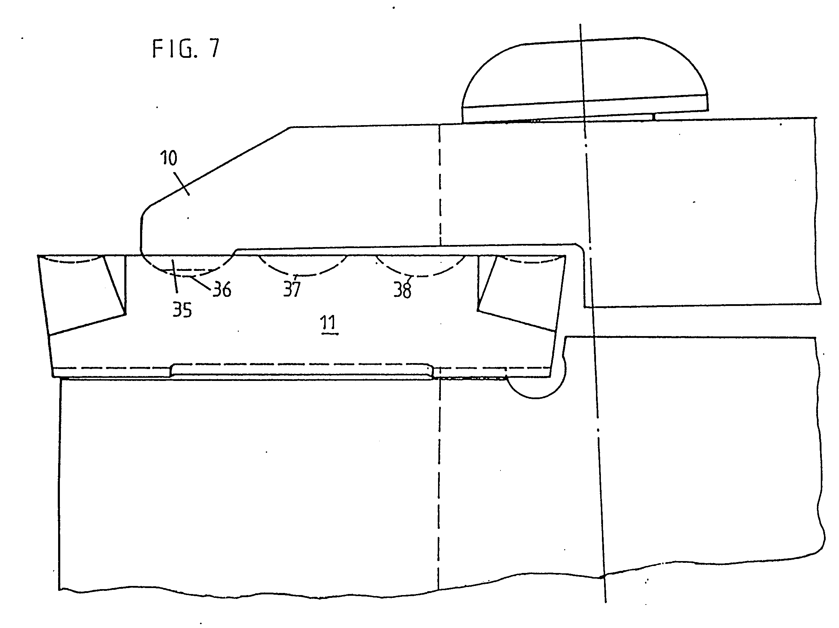

Fig. 7 zeigt eine Ausführungsvariante mit einem Klemmfinger 10, der eine Klemmwarze 35 aufweist, die in eine korrespondierende Schneideinsatzmulde 36 eingreift. Der Schneideinsatz 11 besitzt weitere Schneideinsatzmulden 37 und 38, so daß nach dem Drehen des Werkzeuges jeweils die Klemmulde 38 benutzt werden kann, oder bei Einsatz von anderen Klemmwerkzeugen beispielsweise zur Vergrößerung des Spanraumes die Klemmulde 37 zur Anwendung kommt.

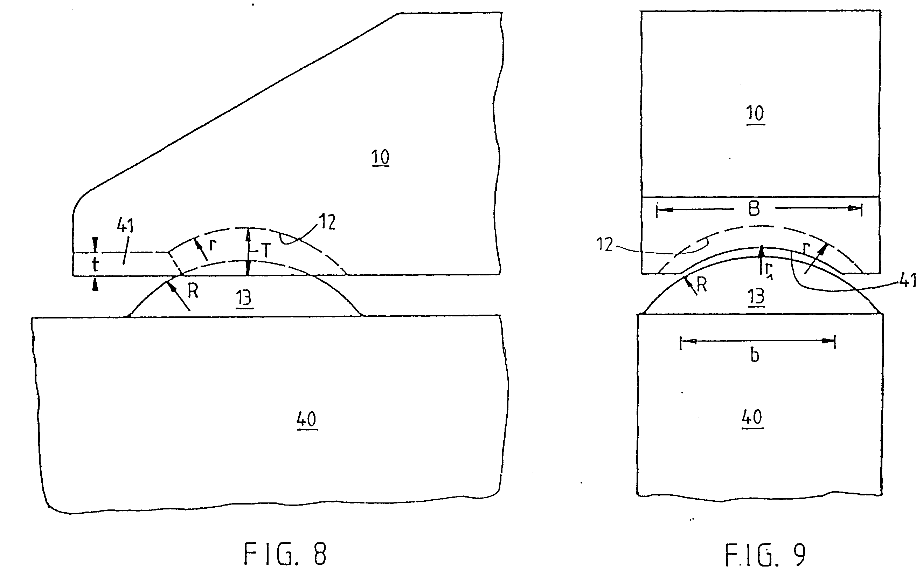

Fig. 8 und 9 zeigen einen Schneideinsatz 40, der in einen Werkzeugträger eingeschoben, aber noch nicht gespannt ist. Der Klemmfinger 10 besitzt an seiner dem Schneideinsatz 40 zugewandten Seite eine kugelkappenförmige Klemmulde 12 mit einem Radius r und einer Tiefe T. Zusätzlich weist der Klemmfinger an seiner dem Schneideinsatz zugewandten Seite eine teilzylinderförmige Aussparung 41 als Führungsnut auf, die einen Radius r₁ und eine Tiefe t besitzt. Die kugelkappenförmige Schneideinsatzerhöhung 13 besitzt einen Radius R, der größer gewählt ist als der Radius r der kugelkappenförmigen Klemmulde 12. In ungespanntem Zustand kann der Schneideinsatz 40 unter Einhaltung eines Spieles durch Passieren der Führungsnut 40 eingeschoben werden, wobei jedoch die Führungsnut eine Kippung des Schneideinsatzes um die in der Blattebene liegende Längsachse verhindert. Die kugelkappenförmige Schneideinsatzerhöhung 13 nimmt während des Einschiebens die aus Fig. 9 ersichtliche Lage ein. Die Breite B der Klemmulde 12 ist größer gewählt als die Breite b der Führungsnut 41.

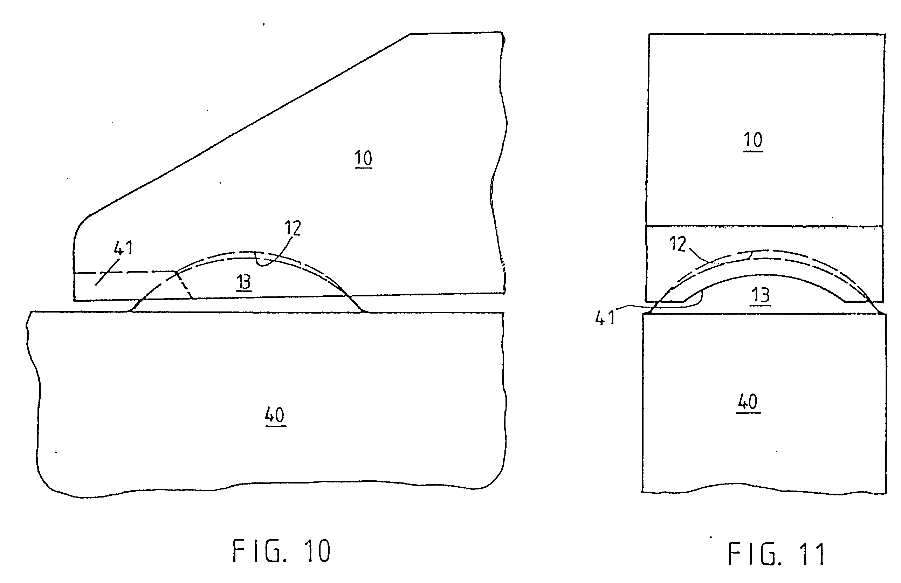

Fig. 10 und 11 zeigen dieselben Anordnung entsprechend Fig. 8 und 9 in geklemmtem Zustand. Durch die kugelkappenförmige Ausbildung der Klemmulde und der Schneideinsatzerhöhung, die einen relativ größeren Kugelkappenradius besitzt, kommt die Schneideinsatzerhöhung 13 zu einer ringförmigen Anlage am äußeren Rand der Klemmulde 12, wodurch der Schneideinsatz sowohl beim Spannen zentriert als auch nach dem Spannen gegen eine Verschiebung nach allen Seiten gesichert ist, insbesondere gegen ein unbeabsichtigtes Herausziehen aus dem Werkzeugträger.

Abwandlungen des Erfindungsgedankens sind auch derart möglich, daß anstelle der beschriebenen Klemmulde und der Schneideinsatzerhöhung sowie der Führungsnut andere Geometrien verwendet werden, die bewirken, daß beim Einführen des Schneideinsatzes 40 in den Werkzeugträger ein Kippen des Schneideinsatzes um seine Längsachse (Einschubrichtung) vermieden wird, und nach dem Spannen der Schneideinsatz durch den Klemmfinger sowohl zentriert als auch gegen ein seitliches Verschieben oder ein Herausziehen aus dem Werkzeugträger gesichert ist.

## Patentansprüche

1. Spanendes Werkzeug mit einem in einem Werkzeugträger auswechselbar über einen Klemmfinger (10) gehalterten Schneideinsatz, insbesondere Stecheinsatz, wobei der Klemmfinger Teil eines selbstklemmenden oder mittels einer Spannschraube betätigbaren, in allen Richtungen spielfrei zentrierten Klemmbackens oder einer Spannpratze ist und der Klemmfinger (10) an seiner dem Schneideinsatz (11, 16, 21, 26, 31) zugewandten Seite eine Klemmwarze (35) aufweist, die in eine korrespondierende Schneideinsatzmulde (36, 37, 38) eingreift oder eine Klemmulde (12) besitzt, die eine korrespondierende Schneideinsatzerhöhung (13, 15) übergreift, wobei die Klemmwarze an der Schneideinsatzmulde (17, 18) oder die Klemmulde (12) an der Schneideinsatzerhöhung (13) an mindestens drei Punkten, die in einer Ebene senkrecht zur Klemmrichtung liegen, angreift, daß der Schneideinsatz (11, 16, 21, 26, 31) nach allen Richtungen, insbesondere in der Horizontalen, d.h., senkrecht zur Klemmrichtung festgelegt ist.

2. Spanendes Werkzeug nach Anspruch 1, dadurch gekennzeichnet, daß die Klemmwarze oder Klemmulde (12) einerseits und/oder die korrespondierend ausgebildete Schneideinsatzmulde oder Schneideinsatzerhöhung andererseits die Form eines drei-, vier- oder mehreckigen Pyramidenstumpfes, einer Kugel- oder Rotationsellipsoidschicht oder einer Kugel- oder Rotationsellipsoidkappe oder eine in der Draufsicht länglich-runde Form mit schrägen Seitenflächen aufweist.

3. Spanendes Werkzeug nach Anspruch 1 oder 2, dadurch gekennzeichnet, daß in der Klemmanlage mindestens drei Punkte oder mindestens drei oder mehr ein n-Eck in der Draufsicht bildende Flächen des Klemmfingers und des Schneideinsatzes aneinanderliegen oder daß die Klemmung rundum über 360° erfolgt.

4. Spanendes Werkzeug nach einem der Ansprüche 2 oder 3, dadurch gekennzeichnet, daß der Pyramidenstumpfwinkel zwischen 150° und 90° liegt.

5. Spanendes Werkzeug nach einem der Ansprüche 1 bis 4, dadurch gekennzeichnet, daß der Schneideinsatz mehrere vorzugsweise hintereinanderliegende Mulden und/oder Erhöhungen bei nur einer Klemmwarze oder Klemmulde des Klemmfingers aufweist.

6. Spanendes Werkzeug nach einem der Ansprüche 1 bis 5, dadurch gekennzeichnet, daß der Schneideinsatz einen zumindest teilweise prismatisch ausgebildeten Boden, der in einem entsprechend prismatischen Plattensitz gehaltert wird, oder in seiner Bodenfläche, vorzugsweise der Mulde oder Erhöhung gegenüberliegend, eine Ausnehmung zur Bildung eines Hohlbodenteilbereiches aufweist.

7. Spanendes Werkzeug nach einem der Ansprüche 1 bis 6, dadurch gekennzeichnet, daß an der Klemmulde (12) oder an der Schneideinsatzmulde (17, 18) eine bis zum vorderen Ende des Klemmfingers (10) reichende axiale Führungsnut (41) anschließt, die eine axiale Bewegung des Schneideinsatzes (40) beim Einsetzen oder Herausziehen unter seitlicher Führung, vorzugsweise mit ausreichendem Spiel, ermöglicht.

8. Spanendes Werkzeug nach Anspruch 7, dadurch gekennzeichnet, daß die Klemmulde (12) oder die Schneideinsatzmulde (17, 18) und die Schneideinsatzerhöhung (13) oder die Klemmwarze kugelkappenförmig ausgebildet sind.

9. Spanendes Werkzeug nach Anspruch 8, dadurch gekennzeichnet, daß die Klemmulde (12) einen kleineren Radius (r) als der Radius (R) der Schneideinsatzerhöhung (13) aufweist oder daß die Schneidsatzmulde einen kleineren Radius als der Radius der Klemmwarze aufweist.

10. Spanendes Werkzeug nach einem der Ansprüche 7 bis 9, dadurch gekennzeichnet, daß die Tiefe (t) und/oder die Breite (b) der Führungsnut (41) kleiner ist als die Tiefe (T) und/oder die Breite (B) der Klemmulde (12) oder der Schneideinsatzmulde ist.

11. Spanendes Werkzeug nach einem der Ansprüche 7 bis 10, dadurch gekennzeichnet, daß die Führungsnut (41) entlang ihrer Längsachse einen konstanten Radius (r₁) und eine gleichbleibende Tiefe (t) aufweist, vorzugsweise eine teilzylinderförmige Aussparung darstellt.

12. Spanendes Werkzeug nach einem der Ansprüche 7 bis 11, dadurch gekennzeichnet, daß der Radius (r₁) der Führungsnut (41) etwa dem Radius (R) der Schneideinsatzerhöhung (13) oder der Klemmwarze entspricht.

13. Spanendes Werkzeug nach einem der Ansprüche 1 bis 6 und 7 bis 12, dadurch gekennzeichnet, daß der Schneideinsatz als doppelseitig verwendbarer Stecheinsatz ausgebildet ist.

14. Spanendes Werkzeug nach einem der Ansprüche 1 bis 13, dadurch gekennzeichnet, daß der Stecheinsatz eine sich an eine Hauptschneide anschließende und zu ihr wie zu einer Stecheinsatzschaftseitenfläche spitzwinklig verlaufende Nebenschneide aufweist.

15. Spanendes Werkzeug nach einem der Ansprüche 1 bis 14, dadurch gekennzeichnet, daß der Stecheinsatz eine sich an eine Nebenschneide anschließende rückwärtige Schneidkante aufweist, die im wesentlichen parallel zur vorderen Hauptschneidkante verläuft.

16. Spanendes Werkzeug nach einem der Ansprüche 1 bis 15, dadurch gekennzeichnet, daß der Stecheinsatz in bezug auf seine Längsachse asymmetrisch ausgebildet ist.

## Claims

1. Machining tool with a cutting insert, especially a parting-off insert, interchangeably secured in a tool holder via a clamping pin (10), characterised in that whereby the clamping pin is part of a self-tightening or screw-actuated clamp jaw being centred without play in all directions or of a retaining claw and the clamping pin (10) has on its side turned toward the cutting insert (11, 16, 21, 26, 31) a clamp bump (35) which engages in a corresponding cutting-insert recess (36, 37, 38) or has a clamp recess (12) which engages over a corresponding cutting-insert projection (13, 15), whereby the clamp bump engages on the cutting-insert recess (17, 19) or the clamp recess (12) engages on the cutting-insert projection (13) at at least three points lying in a plane vertical to the clamping direction such that the cutting insert (11, 16, 21, 26, 34) is secured in all directions, in particularly horizontally, that is perpendicular to the clamping direction.

2. Machining tool according to claim 1, characterised in that the clamp bump or clamp recess (12) on the one side and/or the corresponding cutting-insert recess or cutting-insert projection on the other side have the shape of a three-, four-, or more-sided frustopyramid, a part-spherical or ellipsoidal body of revolution or a elongated round shape with angled side surfaces seen in top view.

3. Machining tool according to claim 1 or 2, characterised in that when clamped at least three points or at least three or more surfaces forming a n-corner seen in top view, the surfaces of the clamping pin and of the cutting insert engage one another or that the clamping is all-around over 360°.

4. Machining tool according to one of claims 2 or 3, characterised in that the frustopyramid angle lies between 150° and 90°.

5. Machining tool according to one of claims 1 through 4, characterised in that the cutting insert has several, preferably adjacent recesses and/or projections with a clamping pin having only one clamp bump or clamp recess.

6. Machining tool according to one of claims 1 through 5, characterised in that the cutting insert has an at least partially prismatic bottom surface which is held in a complementary prismatic plate seat or has in its bottom surface preferably across from the recess or bump a recess for forming a hollow bottom-surface region.

7. Machining tool according to one of claims 1 through 6, characterised in that an axial guide groove (41) extends from a clamp recess (12) or from a cutting-insert recess (17, 18) to the front end of the clamping pin (10) and facilitates axial movement of the cutting insert (40) on insertion or removal with lateral guiding preferably with sufficient play.

8. Machining tool according to claim 7, characterised in that the clamp recess (12) or the cutting-insert recess (17, 18) and the cutting-insert projection (13) or the clamp bump are formed part spherical.

9. Machining tool according to claim 8, characterised in that the clamp recess (12) has a smaller radius r than the radius (R) of the cutting-insert projection (13) or that the cutting-insert recess has a smaller radius than the radius of the clamp bump.

10. Machining tool according to one of claims 7 through 9, characterised in that the depth (t) and/or the width (b) of the guide groove (41) is smaller than the depth (T) and/or the width (B) of the clamp recess (12) or of the cutting-insert recess.

11. Machining tool according to one of claims 1 through 10, characterised in that the guide groove (41) has a constant radius (r₁₎ and a uniform depth (t) along its longitudinal axis, preferably forming a part-cylindrical cutout.

12. Machining tool according to one of claims 7 through 11, characterised in that the radius (r₁₎ of the guide groove (41) corresponds to the radius (R) of the cutting-insert projection (13) or of the clamp bump.

13. Machining tool according to one of claims 1 through 6 and 7 through 13, characterised in that the cutting insert is formed as a double-ended indexable parting insert.

14. Machining tool according to one of claims 1 through 13, characterised in that the parting-off insert has a side-cutting edge extending up to a main-cutting edge and extending at an angle to it and to a cutting-insert shaft side surfaces.

15. Machining tool according to one of claims 1 through 14, characterised in that the parting-off insert has a back cutting edge running to a side cutting edge and extending generally parallel to the front main-cutting edge.

16. The machining tool according to one of claims 1 through 15, characterised in that the parting insert is asymmetrically formed relative to its longitudinal axis.

## Revendications

1. Outil d'usinage avec un insert de coupe, en particulier insert à saigner, supporté de manière échangeable dans un support d'outil par l'intermédiaire d'un doigt de serrage (10), le doigt de serrage faisant partie d'un mandrin de serrage à autoserrage ou manoeuvrable par le biais d'une vis de serrage et centré sans jeu dans toutes les directions, ou d'une griffe de serrage, et le doigt de serrage (10) présentant, de son côté tourné vers l'insert de coupe (11, 16, 21, 26, 31), un bossage de serrage (35) qui engrène dans un creux correspondant (36, 37, 38) de l'insert de coupe, ou possédant un creux de serrage (12) qui se prend sur une élévation correspondante (13, 15) de l'insert de coupe, le bossage de serrage se prenant sur le creux (17, 18) de l'insert de coupe ou le creux de serrage (12) se prenant sur l'élévation (13) de l'insert de coupe sur trois points du moins qui se trouvent dans un plan perpendiculaire à la direction de serrage, que l'insert de coupe (11, 16, 21, 26, 31) est fixé dans toutes les directions, en particulier dans l'horizontale, c'est-à-dire perpendiculairement à la direction de serrage.

2. Outil d'usinage selon la revendication 1, caractérisé par le fait que le bossage de serrage ou le creux de serrage (12) d'un côté et'ou le creux formé de manière correspondante de l'insert de coupe ou l'élévation formée de manière correspondante de l'insert de coupe de l'autre côté présente la forme d'un tronc de pyramide triangulaire, quadrangulaire ou polygonal, d'une couche d'une sphère ou d'une couche d'un éllipsoïde de révolution, ou d'une calotte sphérqiue ou d'une calotte d'un éllipsoïde de révolution, ou une forme qui, vue de dessus, est oblongue-ovale avec des faces latérales obliques.

3. Outil d'usinage selon la revendication 1 ou 2, caractérisé par le fait qu'en état de serrage trois points du moins ou du moins trois surfaces ou plus - qui forment une figure à n angles dans une vue de dessus - du doigt de serrage et de l'insert de coupe s'appuient l'un(e) sur l'autre, ou que le serrage est effectué tout autour sur 360°.

4. Outil d'usinage selon l'une des revendications 2 ou 3, caractérisé par le fait que l'angle du tronc de pyramide est compris entre 150° et 90°.

5. Outil d'usinage selon l'une des revendications 1 à 4, caractérisé par le fait que l'insert de coupe présente plusieurs creux et/ou élévations disposé(e)s de préférence l'un(e) derrière l'autre tandis que le doigt de serrage présente seulement un bossage de serrage ou creux de serrage.

6. Outil d'usinage selon l'une des revendications 1 à 5, caractérisé par le fait que l'insert de coupe présente un fond réalisé de façon prismatique au moins en partie qui est supporté dans un logement de plaquette lui aussi prismatique d'une façon correspondante, ou présente dans sa surface de fond, de préférence en face du creux ou de l'élévation, un évidement pour la formation d'une zone partielle de fond creux.

7. Outil d'usinage selon l'une des revendications 1 à 6, caractérisé par le fait que le creux de serrage (12) ou le creux (17, 18) de l'insert de coupe est suivi d'une rainure axiale de guidage (41) s'étendant jusqu'à l'extrémité avant du doigt de serrage (10), qui permet un mouvement axial de l'insert de coupe (40) lors de l'insertion ou de l'enlévement avec un guidage latéral, de préférence avec un jeu suffisant.

8. Outil d'usinage selon la revendication 7, caractérisé par le fait que le creux de serrage (12) ou le creux (17, 18) de l'insert de coupe et l'élévation (13) de l'insert de coupe ou le bossage de serrage sont réalisés de manière à présenter la forme d'une calotte sphérique.

9. Outil d'usinage selon la revendication 8, caractérisé par le fait que le creux de serrage (12) présente un rayon (r) plus petit que le rayon (R) de l'élévation (13) de l'insert de coupe, ou que le creux de l'insert de coupe présente un rayon plus petit que le rayon du bossage de serrage.

10. Outil d'usinage selon l'une dos revendications 7 à 9, caractérisé par le fait que la profondeur (t) et/ou la largeur (b) de la rainure de guidage (41) est plus petite que la profondeur (T) et/ou la largeur (B) du creux de serrage (12) ou du creux de l'insert de coupe.

11. Outil d'usinage selon l'une des revendications 7 à 10, caractérisé par le fait que la rainure de guidage (41) présente un rayon constant (r₁) ainsi qu'une profondeur (t) constante le long de son axe longitudinal, qu'elle constitue de préférence un évidement ayant la forme d'un cylindre partiel.

12. Outil d'usinage selon l'une des revendications 7 à 11, caractérisé par le fait que le rayon (r₁) de la rainure de guidage (41) correspond à peu près au rayon (R) de l'élévation (13) de l'insert de coupe ou du bossage de serrage.

13. Outil d'usinage selon l'une des revendications 1 à 6 et 7 à 12, caractérisé par le fait que l'insert de coupe est réalisé en tant qu'insert à saigner utilisable aux deux extrémités.

14. Outil d'usinage selon l'une des revendications 1 à 13, caractérisé par le fait que l'insert à saigner présente un tranchant secondaire qui suit le tranchant principal et qui s'étend de façon acutangulaire par rapport à celui-ci comme à une face latérale de la tige de l'insert à saigner.

15. Outil d'usinage selon l'une des revendications 1 à 14, caractérisé par le fait que l'insert à saigner présente un tranchant arrière qui suit un tranchant secondaire et qui s'étend pour l'essentiel parallèlement au tranchant principal avant.

16. Outil d'usinage selon l'une des revendications 1 à 15, caractérisé par le fait que l'inert à saigner est réalisé de façon asymétrique par rapport à son axe longitudinal.
